# EUROPEAN PATENT APPLICATION

(11) **EP 2 009 061 A1**
(43) Date of publication of application: **31.12.2008**
(21) Application number: 08252201.2
(22) Date of filing: 26.06.2008
(51) Int. Cl.: C08L 95/00

(54) **Compositions of controlled-breakage cationic asphalt microsurfacing emulsions**

(30) Priority: 26.06.2007 BR PI0702826
(71) Applicant: Petroóleo Brasileiro S.A. Petrobras, Rio de Janeiro, RJ (BR)
(72) Inventor: Vivoni, Alexandre Marcos, Rio de Janeiro, RJ CEP 20550-030 (BR); Rogrigues, Armiro Aparecido, Diadema CEP 099610549 (BR)
(74) Representative: Benson, John Everett

(57) **Abstract**

Compositions of controlled-breakage cationic asphalt microsurfacing emulsions especially formulated to provide extra-rapid setting on being deposited on paving in coating operations which may be realised during the day, or during the night, under particularly severe ambient conditions for this type of operation, that is to say at temperatures below 15°C with relative air humidity exceeding 50%, but limited to 65%. Said compositions provide extra-rapid setting because they yield wet cohesion results exceeding 25 kgf-cm in one hour when tested by method ISSA TB-139 under the said ambient conditions of temperature and humidity.

## Description

### Field of the invention

The present invention relates to controlled-breakage cationic asphalt microsurfacing emulsions having performance especially suitable for paving coating to be executed by day, or by night, under ambient conditions considered to be adverse for this type of operation, that is to say wherein ambient temperature is a maximum of 15°C and relative air humidity is in the range from 50% to 65%.

### Background of the invention

Mixtures of asphalt emulsions containing particulate solid mineral aggregates to form paste-like paving compositions (slurries), denominated asphalt microsurfacing products, have been known for a long time. Designatable as slow-, medium- or rapid-setting, such asphalt microsurfacing products are also classified as anionic, cationic or non-ionic as a function of the emulsifying agent employed in said compositions.

In the preparation of anionic emulsions a chemical emulsifier is utilised, constituted normally by a product formulated based on the reaction of a fatty acid with an alkali to produce a water-soluble organic salt. In the case of catatonic emulsions, such emulsifier is normally prepared by means of the reaction of amines or imidazolines with an acid such as, for example, hydrochloric acid. Emulsions of non-ironic type may be prepared employing emulsifiers such as organic esters of polyglycols.

Method ASTM D 244-04 "Standard Test Methods and Practices for Emulsified Asphalts" is generally utilised to identify the ionic characteristics of a given asphalt emulsion. In this manner, when the particles of such asphalt emulsion are principally deposited on the positively-charged plate, said asphalt emulsion is said to be anionic. When such deposition on the contrary principally occurs on the negatively-charged plate, such asphalt emulsion is said to be cationic and, finally, when the particles are deposited on the two plates without distinction, the emulsion is said to be non-ionic.

The determination of setting time is only carried out on asphalt microsurfacing compositions ("slurry seals") being the final product of mixtures of asphalt emulsions and particulate solid aggregates. Method ASTM D 244-04 is also one of the methods cited in the literature as an identifier or classifier of the setting type of asphalt microsurfacing compositions. In brief, the method consists of mixing under given conditions 100 ml of the paving slurry to be tested with 50 g of Portland cement for 1 minute and then passing the resulting mixture through an ASTM no. 14.0 sieve. The coagulation percentage is determined by the quantity of material retained on such sieve.

In this manner, rapid-setting asphalt microsurfacing compositions are understood to be those which do not coagulate more than 2% by weight when tested according to said ASTM method.

In the present day such types of test for classifying asphalt compositions have become practically unnecessary because manufacturers of emulsifying additives now specify the ionic or non-ionic character of their products.

Constantly-increasing traffic and the great wear to which asphalt paving is exposed increase the necessity for the provision of rapid and efficient means of repair of such asphalt paving wherein extensive worn areas exist, in order to cause minimum inconvenience to users of highways carrying intense traffic, principally.

Different types of asphalt microsurfacing compositions have been employed for this purpose, however having been demonstrated as unsatisfactory in terms of efficacy due to requiring an excessively long period to harden and, consequently, not being promptly usable. In addition, the majority of such asphalt microsurfacing compositions harden through evaporation, making them dependent on ambient climatic conditions. That is to say, the hardening period thereof may vary greatly.

Another important point in the current state of the art is in terms of the fact that such asphalt microsurfacing compositions, cited in the literature, are particularly susceptible to rain. Consequently should such asphalt microsurfacing compositions not have hardened in time, heavy rain may rapidly wash away or seriously damage paving created on the basis thereof.

It must be emphasised that the use of asphalt microsurfacing as a paving maintenance technique has been developed on the basis of anionic asphalt emulsions which present inherent problems of instability due to physical aspects of insufficient cohesion between the asphalt particles of the emulsion and the aggregate.

As a consequence more recent asphalt emulsions have been formulated having cationic emulsifiers which do not break in the same manner as emulsions formulated with anionic emulsifiers. When cationic asphalt emulsions break on being mixed with aggregate, this results in the bituminous material of such emulsion being deposited on the aggregate through the attraction existing between the opposite polarity charges of the positively-charged drops of asphalt and the negatively-charged surfaces of the particles of aggregate.

Another important aspect to be considered in the process of formation of such asphalt microsurfacing product is that said rapid deposition of the asphalt on the aggregate, referred to hereinbefore, may lead to the formation of large drops of asphalt on the aggregate without such aggregate being fully coated. Such incomplete coating may lead to instability of finished asphalt microsurfacing compositions and, because of this, emulsion stabilisers, or emulsion break-control products, may be added to the initial asphalt emulsions to control asphalt deposition on the aggregate in the final product, in this manner permitting more complete and uniform coating of such aggregate in the form of a continuous film of asphalt.

Controlled-breakage asphalt microsurfacing compositions for cold application are special asphalt microsurfacing products requiring, by definition, to be rapid-setting compositions by virtue of having been designed to permit release to traffic in a maximum of one hour and requiring to provide considerable durability and plasticity to the finished paving and, consequently, necessarily incorporating a latex or a polymer.

To prepare and utilise an asphalt microsurfacing composition, an asphalt emulsion, particulate solid mineral aggregate and water are charged into a suitable vehicle provided with a mechanism to bring about mutual contact between said components. Such asphalt emulsion, stony aggregate and water are mixed within said vehicle but, specifically, within a spreader compartment on the vehicle, at the location wherein the composition will be applied, and as such vehicle moves along the road the mixture is spread on the road surface.

Subsequent to such asphalt emulsion, stony aggregate and water being mixed it is important that the composition possess sufficient fluidity to flow easily and smoothly when sprayed onto the surface to be paved and not solidify prematurely. It is also important that said mixture may be completely homogenised in a maximum period of five minutes which, normally, is the dwell time of such mixture in said spreader compartment.

The final mixture having been spread on the road, the breaking thereof must occur immediately to thus make rapid hardening possible. The time taken for said hardening or setting to take place may be measured by method ISSA TB-139 of the "International Slurry Surfacing Association", whereby an asphalt microsurfacing composition yielding wet cohesion results exceeding 20 kgf-cm in a maximum of one hour under the test conditions is considered to be rapid-setting.

### Related art

One of the principal problems to be resolved with reference to asphalt compositions is the obtainment of a formulation satisfying the desired characteristics of resistance to heavy traffic, being capable of application at low temperatures and having a short setting time.

Practical tests carried out in the laboratory or at the location of application itself have been reported in the literature, such as those illustrating examples of formulations set forth in United States patent US 4193816, to evaluate the efficiency of a formulation.

In terms of quality of the paving produced, United States patent US 5242492 teaches a method of evaluation wherein such paving, following subjection to a traffic load, denominated rolling traffic, may not present indentations (crack formation) or deformation marks (depression caused by tyres) in the surface of such paving. Said test consists of evaluating the effect brought about by a standard automobile of 700 kg to 900 kg travelling at 65 km/h for a period of one hour.

Another problem associated with emulsifiers relates to the poor adhesion thereof to aggregates of the types of clay, gravel, crushed rock, crushed limestone and crushed granite types having high mica content. One of the key requirements for microsurfacing systems is the capacity of the microsurfacing emulsion to remain sufficiently stable to cover and mix completely with the aggregate and other components of the mixture prior to exiting from the microsurfacing machine, whatever the conditions of the weather or of the construction project itself. Said capacity of such microsurfacing emulsion to remain sufficiently stable to cover and mix completely with the other components of the mixture prior to exiting from the microsurfacing machine characterises controlled-breakage microsurfacing products.

In this manner, in addition to all the difficulties presented hereinbefore, specialists in microsurfacing emulsion technology are presented with a further problem, being control of the breakage of such emulsion systems wherein there is incorporated therein a given type of aggregate, a given type of emulsifier, whilst in addition being required to combat general weather conditions during application of such microsurfacing emulsion to the paving.

Innumerable microsurfacing emulsion compositions have been previously described. As reference there may for example be cited United States patents US 5242492 and US 5034060, reporting emulsion formulations of the same type as those herein proposed, however presenting disadvantages in terms of the results of wet cohesion, as will be shown in the detailed description of the present invention.

Consequently improvement in asphalt microsurfacing emulsion compositions becomes necessary in order to better control the conditions of breakage of said compositions, to achieve faster setting for such compositions and thus to obtain final paving having better quality and, in addition, making them suitable for applications under weather conditions being relatively cold and having high humidity and, principally, in addition making them suitable for nocturnal applications with consequent productivity gains and causing less inconvenience to users of the roads being resurfaced.

The compositions proposed by the present invention have the objective of satisfying the requirements hereinbefore mentioned.

One objective of the present invention is to provide compositions of controlled-breakage cationic asphalt microsurfacing emulsions formulated with the asphalt, emulsifier, additive and aggregate components normally comprising such microsurfacing compositions, but which present improved performance in relation to the compositions known until now, particularly in respect of rapidity of set characteristics, characterised by providing accelerated development of wet cohesion, yielding results exceeding 25 kgf-cm at one hour when tested by method ISSA TB-139 at temperatures below 15°C and relative air humidity exceeding 50, but limited to 60%.

An additional objective of the present invention is to provide compositions of controlled-breakage cationic asphalt microsurfacing emulsions capable of generating final mixtures being stable and having proven fluidity, efficacy and applicability, even when there form part of said mixtures aggregates of recognized difficulty of stabilisation, such as granite aggregates having high mica concentration.

The compositions of the present invention additionally make productivity gains possible and minimise the degree of inconvenience to users of vehicular roadways insofar as permitting nocturnal applications by virtue of the fact that in practice they do not require the presence of solar light to achieve extra-rapid setting.

### Summary of the invention

The present invention relates to controlled-breakage cationic asphalt microsurfacing emulsions especially formulated to provide extra-rapid setting on deposition in paving in coating operations which may be realised during the day, or during the night, under particularly severe ambient conditions for this type of operation, that is to say at temperatures below 15°C with relative air humidity exceeding 50%, but limited to 65%.

The compositions of the present invention are characterised by being constituted by:
a) asphalt derivatives of petroleum in a range from 4.0% to 10.0% by weight of the total composition;
b) organic or inorganic acids in a range from 0.2% to 3.5% by weight of the total composition;
c) water in a range from 8.0% to 15.0% by weight of the total composition;
d) latex, polymers or thermoplastic resins in a range from 0.5% to 1.5% by weight of the total composition;
e) break-control cationic emulsifier in a range from 0.05% to 0.7% by weight of the total composition;
f) particulate solid mineral aggregates in a range from 75.0% to 90.0% by weight of the total composition;
g) set initiators in a range from 0.1% to 0.8% by weight of the total composition of additives;
h) break-control additives in a range from 0.1°s to 0.4% by weight of the total composition;
i) break-control product.

### Detailed description of the preferred embodiment

The asphalt microsurfacing compositions herein presented are destined to promote improved paving in road constructions, resurfacing of extensive stretches of roads, and also other types of coating requiring quality and toughness, but prioritarily requiring rapid availability of the surfaced stretch for the purpose for which it is destined.

The initial asphalt emulsions which, from this point onwards, will be referred to in this manner, are precursors of the microsurfacing compositions object of the present invention and comprise water-in-oil type emulsions, being constituted essentially of:
- water;
- bituminous compounds, principally asphalts of any of the types in existence in the market, being the oily phase of the emulsion;
- emulsifiers being selected, according to the present invention, from among those having a cationic nature;
- acids;
- polymers and, possibly;
- auxiliary additives for control of breakage of such emulsions.

The oily phase of such initial asphalt emulsions may be constituted by petroleum asphalt cements (CAPs) selected from among the following types: CAP 30/45, CAP 50/70, CAP 85/100, CAP 150/200, or asphalts modified by polymers of the SBS, SBR or EVA type, or alternatively fast-setting petroleum-diluted asphalts such as CR-3000, or mixtures thereof in any proportions, in concentrations which may range from 55% to 75% by weight but preferably in a range from 60% to 70% by weight of the total composition of such initial asphalt emulsions.

Water concentration may range from 20% to 50% by weight, but preferably from 25% to 35% approximately by weight of the total composition of such initial asphalt emulsions.

Compounds of utility in emulsifying said oily phase in the aqueous phase are those emulsifiers indicated by their respective manufacturers as being capable of forming water-in-oil emulsions, of a cationic nature, such as emulsifiers based on tetramines of fatty acids of animal or vegetable origin, quaternary ammonium salts of fatty acids of animal or vegetable origin, but preferably compounds based on polyamines or imidazolines of fatty acids, or balanced mixtures of both, at concentrations ranging from 0.5% to 2.0% by weight, but preferably from approximately 0.9% to 1.5% by weight of the total composition of such initial asphalt emulsions.

To protonate and activate the emulsifiers based on amines comprising the compositions of the present invention, the following acids are of utility: industrial grade acetic acid, industrial grade phosphoric acid, food grade phosphoric acid or industrial grade monosodium orthophosphate, in concentrations ranging from 0.3% to 3.5% by weight of the total emulsion, but preferably industrial phosphoric acid is utilised in concentrations of the order of 1.0% to 2.5% by weight, normally taking the pH of the emulsion to 2.5 to 3.5, as recommended by the manufacturer of such emulsifier.

With respect to polymers which of necessity require incorporation into the compositions of the present invention to provide resistance and plasticity to the final paving, the following are of utility: styrene-butadiene latexes (SBRs), styrene-butadiene-styrene (SBS) block copolymers, thermoplastic resins such as for example ethylene-vinyl acetate (EVA) thermoplastic resins, in concentrations ranging from 2.0% to 8.0% by weight, however preferably an SBR latex is utilised in concentrations from approximately 2.5% to 5.0% by weight of the total composition of such initial asphalt emulsions.

It is possible that the compositions of said initial asphalt emulsions of the present invention may require auxiliary break-control additives and in such cases the following are of utility: industrial grade aluminium sulphate or monosodium orthophosphate, also of industrial grade, among others of less technical importance.

Said initial asphalt emulsions of the present invention may be produced by high-shear dispersion, such dispersions being obtained in colloidal mills or high-energy dispersers having design parameters widely-known in the current state of the art and normally present in conventional plants producing asphalt emulsions.

As hereinbefore mentioned in the body of the present specification, the initial asphalt emulsions are precursors of the asphalt microsurfacing compositions which, according to the principles of the present invention, may be prepared in accordance with procedures known in the state of the art, comprising mixing a previously-prepared initial asphalt emulsion, in concentrations ranging from 5.0% to 15% by weight, but preferably from 8.0% to 12.0% by weight, of the total composition of the asphalt microsurfacing into a paste composed of:
a) from 70% to 90% by weight of the total asphalt microsurfacing composition of particulate solid aggregates selected from among granites, basalts, pozzolanic ashes or limestone, or mixtures thereof in any proportions, but preferably between 80% and 85% by weight of a particulate granite classified as type II of the ISSA Classification of Particulate Solid Aggregates;
b) from 0.1% to 1.0% by weight of the total asphalt microsurfacing composition of set initiators of the Portland cement, hydrated lime or pozzolanic ash type, or mixtures thereof in any proportions, but preferably between 0.2% and 0.6% by weight of CP II-F32 Portland cement;
c) from 5.0% to 15.0% by weight of the total asphalt microsurfacing composition of water, but preferably from 8.0% to 12.0% by weight of water;
d) from 0.1% to 0.4% by weight of the total asphalt microsurfacing composition of break-control additives selected from between aluminium sulphate or monosodium orthophosphate, or mixtures of both thereof in any proportions.

Consequently it may be stated that the asphalt microsurfacing compositions of the present invention have a dynamic character, given that their proportions may be continuously modified and adjusted throughout paving operations.

It is also stressed that the conceptual basis of the compositions of the present invention is to achieve that said compositions attain the limit stipulated for extra-rapid setting accelerated performance without ignoring the parameters of compatibility and final quality of surfacing and of the finished paving.

The present invention will now be illustrated by the following examples (on a field scale) which, however, must not be considered as being limiting thereof.

### Example 1

The composition shown in Table 1 has been formulated and successfully tested in the resurfacing of an area of 7000 m² of a lorry loading and unloading yard (CEASA, at Campinas, São Paulo, Brazil) during the period from 01/03/2006 to 03/03/2006. Application was made entirely by night at a temperature of 12°C and a mean relative air humidity of 55%.

**Table 1**

| COMPONENT | QUANTITY |
|---|---|
| | (% by weight) |
| CAP 30/45 | 5.2 |
| Emulsifier | 0.13 |
| Phosphoric acid | 0.1 |
| SBR latex | 0.26 |
| Water | 11.2 |
| Granite aggregate, type II (ISSA) | 82.8 |
| Cement CP II F 32 | 0.4 |

Said asphalt microsurfacing composition yielded wet cohesion results of 27 kgf-cm at 30 minutes and 30 kgf-cm at 60 minutes when subjected to test ISSA TB-139 during application in the field. Subsequent to completion said stretches of road were released to traffic one hour following conclusion of application of said microsurfacing composition on the surface. The entire stretch has been periodically evaluated on a three-monthly basis, no visible surface indentation or deformation defects having appeared after the first year from application.

In addition, the fact of non-appearance to date of visible defects in the stretch paved may be considered indicative of the quality of paving, given that the traffic to which the stretch in the field test hereinbefore mentioned has been subjected is very much heavier than the rolling traffic used as performance test standard, duly described in the body of the present specification.

### Example 2

The composition shown in Table 2 has been formulated and successfully tested in the resurfacing of 10 000 m² of diverse paved stretches at Cidade Universitária (Ilha do Fundão, Ilha do Governador, Rio de Janeiro, Brazil) in the period from 01/07/2006 to 15/07/2006. The applications were made during the day at temperatures ranging from 25°C to 30°C and mean relative air humidity of 45%.

**Table 2**

| COMPONENT | QUANTITY |
|---|---|
| | (% by weight) |
| CAP 30/45 | 5.2 |
| Emulsifier | 0.1 |
| Phosphoric acid | 0.08 |
| SBR latex | 0.26 |
| Water | 11.1 |
| Granite aggregate having high mica content | 82.6 |
| Cement CP II F 32 | 0.24 |
| Aluminium sulphate | 0.24 |

The foregoing microsurfacing composition yielded wet cohesion results of 14 kgf-cm at 30 minutes and 25 kgf-cm at 60 minutes (the aggregate utilised in the said composition was considered to be of very poor quality) when subjected in the field to test ISSA TB-139. Subsequent to completion said stretches of road were released to traffic one hour following application of such microsurfacing composition.

The entire stretch has been periodically evaluated on a three-monthly basis, no visible surface indentation or deformation defects having appeared after the first six months from conclusion of surfacing.

In addition, the fact of non-appearance to date of visible defects in the stretch paved may be considered indicative of the quality of paving, given that the traffic to which the stretch in the field test has been subjected is much more intense than the so-called rolling traffic used as performance test standard, duly described in the body of the present specification.

## Claims

1. COMPOSITIONS OF CONTROLLED-BREAKAGE CATIONIC ASPHALT MICROSURFACING EMULSIONS **characterised in** being constituted by:
a) asphalt derivatives of petroleum in the range from 4.0% to 10.0% by weight of the total composition;
b) organic or inorganic acids in the range from 0.2% to 3.5% by weight of the total composition;
c) water in the range from 8.0% to 15.0% by weight of the total composition;
d) latex, polymers or thermoplastic resins in the range from 0.5% to 1.5% by weight of the total composition;
e) break-control cationic emulsifier in the range from 0.05% to 0.7% by weight of the total composition;
f) particulate solid mineral aggregates in the range from 75.0% to 90.0% by weight of the total composition;
g) set initiators in the range from 0.1% to 0.8% by weight of the total composition of additives;
h) break-control additives in the range from 0.1% to 0.4% by weight of the total composition;
i) break-control product.

2. COMPOSITIONS OF CONTROLLED-BREAKAGE CATIONIC ASPHALT MICROSURFACING EMULSIONS **characterised in** being especially formulated to provide extra-rapid setting in paving coating operations which may be executed during the day or during the night under particularly severe ambient conditions for this type of operation, that is to say in ambient temperatures below 15°C with relative air humidity exceeding 50%, but limited to 65%.

3. COMPOSITIONS OF CONTROLLED-BREAKAGE CATIONIC ASPHALT MICROSURFACING EMULSIONS according to Claim 1 **characterised by** said petroleum asphalt derivatives of a) being petroleum asphalt cements (CAPs) selected from among CAP 30/45, CAP 50/70, CAP 85/100, CAP 150/200, asphalts modified by polymers of the SBS, SBR or EVA type or, in addition, fast-setting diluted petroleum asphalts such as CR-3000, or mixtures thereof in any proportions.

4. COMPOSITIONS OF CONTROLLED-BREAKAGE CATIONIC ASPHALT MICROSURFACING EMULSIONS according to Claim 3 **characterised by** said petroleum asphalt derivative preferably being CAP 30/45 in concentrations which may range from 4.5% to 6.0% by weight of the total composition.

5. COMPOSITIONS OF CONTROLLED-BREAKAGE CATIONIC ASPHALT MICROSURFACING EMULSIONS according to Claim 1 **characterised by** such organic or inorganic acids of b) being selected from among industrial grade acetic acid, industrial grade phosphoric acid, food grade phosphoric acid.

6. COMPOSITIONS OF CONTROLLED-BREAKAGE CATIONIC ASPHALT MICROSURFACING EMULSIONS according to Claim 5 **characterised by** said acid of b) preferably being industrial phosphoric acid in concentrations which may range from 0.1% to 0.5% by weight of the total composition.

7. COMPOSITIONS OF CONTROLLED-BREAKAGE CATIONIC ASPHALT MICROSURFACING EMULSIONS according to Claim 1 **characterised by** the concentrations of water of c) ranging from 10% to 12% by weight of the total composition.

8. COMPOSITIONS OF CONTROLLED-BREAKAGE CATIONIC ASPHALT MICROSURFACING EMULSIONS according to Claim 1 **characterised by** such polymers of d) being selected from among styrene-butadiene latexes (SBRs), styrene-butadiene-styrene (SBS) block copolymers, and among thermoplastic resins, such as for example ethylene-vinyl acetate (EVA) thermoplastic resins.

9. COMPOSITIONS OF CONTROLLED-BREAKAGE CATIONIC ASPHALT MICROSURFACING EMULSIONS according to Claim 8 **characterised by** said polymer preferably being styrene-butadiene latex (SBR) in concentrations ranging from 0.2% to 0.5% by weight of the total composition.

10. COMPOSITIONS OF CONTROLLED-BREAKAGE CATIONIC ASPHALT MICROSURFACING EMULSIONS according to Claim 1 **characterised by** such break-control cationic emulsifiers of e) being selected from among emulsifiers based on tetramines of fatty acids of animal or vegetable origin, based on quaternary ammonium salts of fatty acids of animal or vegetable origin or alternatively based on polyamines or imidazolines of fatty acids or alternatively emulsifiers composed of balanced mixtures of each of said amine-based compounds.

11. COMPOSITIONS OF CONTROLLED-BREAKAGE CATIONIC ASPHALT MICROSURFACING EMULSIONS according to Claim 10 **characterised by** said emulsifier preferably being a commercial product identified as being constituted by polyamines, in concentrations which may range from 0.1% to 0.5% by weight of the total composition.

12. COMPOSITIONS OF CONTROLLED-BREAKAGE CATIONIC ASPHALT MICROSURFACING EMULSIONS according to Claim 1 **characterised by** such particulate solid aggregates of f) being selected from among granites, basalts, pozzolanic ashes or limestone or mixtures thereof in any proportions.

13. COMPOSITIONS OF CONTROLLED-BREAKAGE CATIONIC ASPHALT MICROSURFACING EMULSIONS according to Claim 12 **characterised by** said particulate solid aggregate preferably being granite classified as type II, in concentrations which may range from 80.0% to 85.0% by weight of the total composition.

14. COMPOSITIONS OF CONTROLLED-BREAKAGE CATIONIC ASPHALT MICROSURFACING EMULSIONS according to Claim 1 **characterised by** such set initiators of g) being selected from among Portland cements, hydrated lime and pozzolanic ashes; and preferably being CP II-F32 Portland cement, preferably in concentrations which may range from 0.2% to 0.6% by weight of the total composition.

15. COMPOSITIONS OF CONTROLLED-BREAKAGE CATIONIC ASPHALT MICROSURFACING EMULSIONS according to Claim 1 **characterised by** such break-control additives of g) being selected from among aluminium sulphate or monosodium orthophosphate, or mixtures of both thereof in any proportions, being however solely added to such compositions should the same not comply with the specified break control standards of said microsurfacing compositions.
